# EUROPÄISCHE PATENTSCHRIFT

(11) **EP 2 079 937 B1**
(45) Veröffentlichungstag und Bekanntmachung des Hinweises auf die Patenterteilung: **08.02.2012**
(21) Anmeldenummer: 07820840.2
(22) Anmeldetag: 02.10.2007
(51) Int. Cl.: F16D 23/04, F16H 63/30

(54) **VORRICHTUNG ZUM DREHFESTEN VERBINDEN EINER WELLE MIT EINEM DREHBAR AUF DER WELLE GELAGERTEN BAUTEIL**
DEVICE FOR ROTATIONALLY FIXEDLY CONNECTING A SHAFT TO A COMPONENT WHICH IS ROTATABLY MOUNTED ON THE SHAFT
DISPOSITIF DE LIAISON SOLIDAIRE EN ROTATION D'UN ARBRE AVEC UN COMPOSANT LOGÉ DE MANIÈRE ROTATIVE SUR L'ARBRE

(30) Priorität: 19.10.2006 DE 102006049276
(43) Veröffentlichungstag der Anmeldung: 22.07.2009
(73) Patentinhaber: ZF Friedrichshafen AG, 88038 Friedrichshafen (DE)
(72) Erfinder: REISCH, Matthias, 88214 Ravensburg (DE); MOHR, Mark, 88069 Tettnang (DE)
(86) Internationale Anmeldenummer: PCT/EP2007/060458
(87) Internationale Veröffentlichungsnummer: WO 2008/046738

(56) Entgegenhaltungen:
- EP-A- 0 492 836
- EP-A- 1 830 092
- WO-A-2005/036007
- CA-A1- 2 451 899

## Beschreibung

Die Erfindung betrifft eine Vorrichtung zum drehfesten Verbinden einer Welle mit einem drehbar auf der Welle gelagerten Bauteil gemäß der im Oberbegriff des Patentanspruches 1 näher definierten Art.

In der Getriebetechnik werden als Losräder ausgeführte Zahnräder verschiedener Gangstufen einer Getriebeeinrichtung mit einer Getriebewelle, auf welcher die Losräder angeordnet sind, mittels so genannter Synchronisierungen drehfest verbunden. Das bedeutet, dass beim Schalten eines Ganges einer Getriebeeinrichtung Drehzahldifferenzen zwischen einem zuzuschaltenden Losrad und der diesem Losrad zugeordneten Getriebewelle mittels einer Synchronisierung reibschlüssig ausgeglichen werden. Bei Erreichen einer Drehzahlgleichheit zwischen dem Losrad und der Getriebewelle liegt kein dynamisches Reibmoment mehr vor und eine so genannte Sperrverzahnung gibt eine Klaue einer Synchronisierung frei, um den gewünschten Gang formschlüssig einlegen zu können.

Derartige Synchronisierungen benötigen nachteilhafterweise aufgrund der Ausführung mit Reibelementen, Sperrelementen und Klauen unerwünscht viel Bauraum und sind durch hohe Herstellkosten gekennzeichnet.

Neben den vorbeschriebenen Synchronisierungen werden bei aus der Praxis bekannten Getriebeeinrichtungen zum Zuschalten von Losrädern konstruktiv einfach ausgeführte reibschlüssige Schaltelemente, wie Lamellenschaltelemente, verwendet. Um derartige Schaltelemente in geschlossenem Zustand halten zu können, sind diese im allgemeinen jeweils mit einer zu dem geschlossenen Zustand der Schaltelemente äquivalenten Haltekraft, die vorzugsweise hydraulisch erzeugt wird, zu beaufschlagen. Diese permanent aufzubringende Haltekraft verschlechtert jedoch einen Gesamtwirkungsgrad einer Getriebeeinrichtung.

Aus der CA 2 451 899 A1 ist ein mit einer so genannten Selbstverstärkung ausgeführtes reibschlüssiges Schaltelement bekannt, welches ohne separat aufzubringende Haltekraft aufgrund eines anliegenden Drehmomentes in geschlossenem Zustand verbleibt.

Nachteilig dabei ist jedoch, dass die Verbindung zwischen einem drehbar auf einer Welle gelagerten Bauteil und der Welle reibschlüssig hergestellt wird, so dass ein Ankoppeln des Bauteils an der Welle hinsichtlich eines Fahr komforts nur bei niedrigen Differenzdrehzahlen zwischen dem Bauteil bzw. einem Losrad und einer Welle unproblematisch ist. Wird ein Zuschalten bzw. ein drehfestes Verbinden des Bauteils mit der Welle bei hohen Differenzdrehzahlen zwischen dem Bauteil und der Welle angefordert, führt die über die Selbstverstärkung herzustellende formschlüssige Verbindung zwischen der Welle und dem Bauteil aufgrund sehr kurzer Schaltzeiten zu einem Impulsaustausch mit hohen Drehmomentspitzen, aus welchen eine Verschlechterung des Fahrkomforts sowie unerwünscht hohe Bauteilbelastungen resultieren.

Aus der EP 0 492 836 A ist eine Vorrichtung zum drehfesten Verbinden einer Welle mit einem drehbar auf der Welle gelagerten Bauteil bekannt. Die Vorrichtung umfasst in axialer Richtung verschieblich und drehbar auf der Welle gelagerte Betätigungselemente, die über einen Aktor mit der Welle drehfest verbindbar sind. Eine Differenzdrehzahl zwischen dem Bauteil und der Welle ist über die Betätigungselemente wenigstens annähernd ausgleichbar, wenn die Betätigungselemente ausgehend von einer mittleren Neutralstellung vom Aktor axial in Richtung des Bauteiles verschoben werden. Dabei werden auch die mit den Betätigungselementen zunächst noch wirkverbundenen weiteren Betätigungselemente in Richtung des Bauteiles verfahren.

In der mittleren Neutralstellung sind die Betätigungselemente aufgrund einer Anlage eines der Betätigungselemente im Bereich einer Innenverzahnung an wellenfesten Bauteilen drehfest mit der Welle verbunden und die Reibflächen der Konuskupplungen sind leicht beabstandet.

Während einer axialen Verstellung ausgehend von der Neutralposition in Richtung einer axial verschobenen Stellung gleitet eines der Betätigungselemente im Bereich seiner Innenverzahnung an dem wellenfesten Bauteil ab, wodurch die Betätigungselemente gegenüber der Welle drehbar sind.

Die während der letztbeschriebenen Schaltphase nunmehr gegenüber der Welle drehbar ausgeführten Betätigungselemente kommen mit zunehmendem Verstellweg des Betätigungselementes mit konischen Reibflächen mit jeweils einer korrespondierenden konischen Reibfläche des Bauteiles in Reibkontakt, um eine Differenzdrehzahl zwischen der Welle und dem Bauteil ausgleichen zu können. Dabei liegt an dem Betätigungselement während der Synchronisierungsphase zwischen der Welle und dem Bauteil über die im Bereich zwischen der Innenverzahnung und der Welle im Bereich des Bauteils vorliegende Wirkverbindung eine in axialer Richtung wirkende und aus einer Selbstverstärkung resultierende Betätigungskraft an, die einen Teil der Betätigungselemente gemeinsam mit einem weiteren Betätigungselement zusätzlich zur ebenfalls in axialer Richtung wirkenden aktorseitigen Betätigungskraft mit ihren Reibflächen gegen die Reibfläche des Bauteiles drückt.

Bei der Vorrichtung wird die drehfeste bzw. formschlüssige Wirkverbindung zwischen dem Bauteil und der Welle alleine durch eine aktorseitige Betätigung eines Teils der Betätigungselemente hergestellt, da eines der Betätigungselemente durch Überdrücken eines Kolbens aus dem Eingriff mit dem Betätigungselement und damit auch mit weiteren Betätigungselementen kommt.

Der vorliegenden Erfindung liegt die Aufgabe zu Grunde, eine Vorrichtung zum drehfesten Verbinden einer Welle mit einem drehbar auf der Welle gelagerten Bauteil zur Verfügung zu stellen, welches durch einen geringen Bauraumbedarf gekennzeichnet ist, kostengünstig herstellbar ist und mittels welcher ein hoher Fahrkomfort bei gleichzeitig geringen Bauteilbelastungen erreichbar ist.

Erfindungsgemäß wird diese Aufgabe mit einer Vorrichtung gemäß den Merkmalen des Patentanspruches 1 gelöst.

Bei der erfindungsgemäßen Vorrichtung zum drehfesten Verbinden einer Welle mit einem drehbar auf der Welle gelagerten Bauteil, vorzugsweise zum Verbinden eines als Losrad ausgeführten Zahnrades einer Gangstufe einer Getriebeeinrichtung mit einer Getriebewelle, mit einem in axialer Richtung verschieblich und drehbar auf der Welle gelagerten Betätigungselement, das über einen Aktor mit der Welle drehfest verbindbar ist und mit dem eine Differenzdrehzahl zwischen dem Bauteil und der Welle über das aktorseitig betätigbare Betätigungselement wenigstens annähernd ausgleichbar ist, ist das Betätigungselement zum Ausgleich einer Differenzdrehzahl zwischen der Welle und dem Bauteil in gegenüber der Welle drehfestem Zustand mit dem Bauteil bei entsprechender aktorseitiger Betätigung bereichsweise reibschlüssig in Wirkverbindung bringbar und zum drehfesten Verbinden des Bauteils mit der Welle mittels eines Aktors von einem drehfesten in einen gegenüber der Welle drehbaren Zustand überführbar und steht mit wenigstens einem wellenfest ausgebildeten Stützkörper derart in Wirkverbindung, dass das Bauteil in gegenüber der Welle drehbarem Zustand des Betätigungselementes von diesem mit einer in Abhängigkeit eines von der Welle auf das Bauteil zu übertragenden Drehmomentes stehenden und von der aktorseitigen Betätigung im Wesentlichen unabhängigen Betätigungskraft beaufschlagbar ist.

Damit ist ein drehbar auf einer Welle gelagertes Bauteil über ein mit einer Selbstverstärkung ausgeführtes Schaltelement drehfest mit der Welle verbindbar, wobei die drehfeste Verbindung in zwei Phasen hergestellt wird. Während einer ersten Phase wird eine Differenzdrehzahl zwischen dem Bauteil und der Welle reibschlüssig ausgeglichen bzw. das Bauteil und die Welle werden miteinander synchronisiert. Während dieser ersten Phase ist die Selbstverstärkung inaktiv und eine aktorseitig erzeugte Schaltkraft wird zur Erzeugung eines Reibmomentes zwischen dem wellenfest vorliegenden Betätigungselement und dem Bauteil verwendet, um einen Synchronzustand zwischen dem Bauteil und der Welle herzustellen.

Während einer sich an die erste Phase anschließenden zweiten Phase wird die Selbstverstärkung durch Überführen des Betätigungselementes aus einem drehfesten in einen gegenüber der Welle drehbaren Zustand aktiviert und im Bereich von Reibflächen des Betätigungselementes und des Bauteils mit einer in Abhängigkeit des von der Welle auf das Bauteil zu übertragenden Drehmomentes stehende sowie von der aktorseitigen Betätigung des Betätigungselementes unabhängigen Anpresskraft beaufschlagt. Damit wird das Bauteil ohne vom Aktor eine Haltekraft zur Verfügung stellen zu müssen bei Überschreiten eines vordefinierten Schwellwertes der Anpresskraft drehfest mit der Welle verbunden.

Vorteilhafte Weiterbildungen des Gegenstandes nach der Erfindung ergeben sich aus den Patentansprüchen und dem unter Bezugnahme auf die Zeichnung prinzipmäßig beschriebenen Ausführungsbeispiel.

Es zeigt:
- Fig. 1: eine stark schematisierte Teillängsschnittansicht einer Vorrichtung nach der Erfindung;
- Fig. 2: eine Abwicklung eines Betätigungselementes der Vorrichtung gemäß Fig. 1 in einer Neutralposition;
- Fig. 3: das Betätigungselement der Vorrichtung gemäß Fig. 1 in einer Fig. 2 entsprechenden Darstellung während einer Synchronisierungsphase;
- Fig. 4: das Betätigungselement der Vorrichtung 1 gemäß Fig. 1 in einer Fig. 2 entsprechenden Darstellung in einem gegenüber einer Welle drehbaren Zustand; und
- Fig. 5: das Betätigungselement der Vorrichtung nach der Erfindung in einem das Bauteil drehfest mit der Welle verbindenden Zustand.

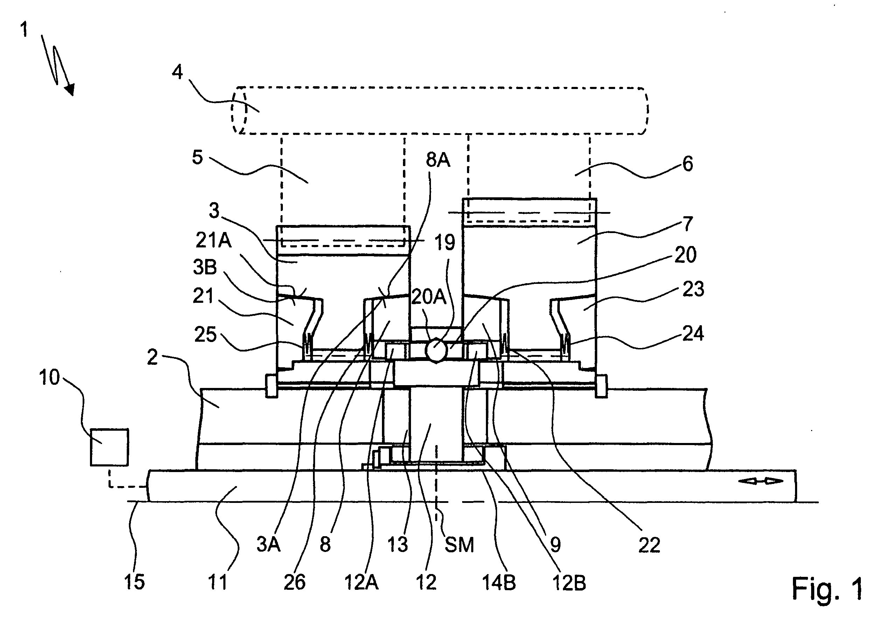

Fig. 1 zeigt eine Vorrichtung 1 zum drehfesten Verbinden einer Welle 2 mit einem drehbar auf der Welle 2 gelagerten Bauteil 3, wobei die Welle 2 vorliegend als eine Vorgelegewelle eines Vorgelegegetriebes ausgeführt ist, auf welchem das als Losrad ausgebildete Bauteil 3 angeordnet ist.

Hiervon abweichend ist die Vorrichtung 1 auch in anderen Getriebeeinrichtungen, wie automatisierten Schaltgetrieben, Doppelkupplungsgetrieben oder Planetengetrieben, als Synchronisierung und Schaltelement für eine automatisierte Betätigung einer Getriebeeinrichtung während Schaltvorgängen und dergleichen einsetzbar.

Parallel zu der Vorgelegewelle 2 ist eine Getriebehauptwelle 4 vorgesehen, auf welcher mehrere als Festräder ausgeführte Zahnräder 5, 6 angeordnet sind, wobei das Zahnrad 5 mit dem Losrad 3 und das Zahnrad 6 mit einem weiteren auf der Vorgelegewelle 2 drehbar gelagerten Losrad 7 kämmt.

Die beiden Losräder 3 und 7 sind über die Vorrichtung 1 wechselweise dahingehend betätigbar, dass die Losräder 3 und 7 aus einem auf der Vorgelegewelle 2 drehbaren Zustand in einen gegenüber der Vorgelegewelle 2 drehfesten Zustand oder aus einem drehfesten Zustand in einen gegenüber der Vorgelegewelle 2 drehbaren Zustand überführbar sind, um ein an der Vorgelegewelle 2 anliegendes Drehmoment über das erste Losrad 3 oder das zweite Losrad 7 und über das Zahnrad 5 oder das Zahnrad 6 in die Getriebehauptwelle 4 einleiten zu können.

Dazu ist die Vorrichtung 1 vorliegend mit zwei in axialer Richtung verschieblich und drehbar auf der Vorgelegewelle 2 gelagerten Betätigungselementen 8, 9 ausgeführt, welche über einen Aktor 10 mit der Vorgelegewelle 2 drehfest verbindbar sind und in drehfestem Zustand mit den Losrädern 3 und 7 bei entsprechender aktorseitiger Betätigung bereichsweise reibschlüssig in Wirkverbindung bringbar sind. Des Weiteren ist eine Differenzdrehzahl zwischen den Losrädern 3 und 7 und der Vorgelegewelle 2 über die aktorseitig betätigbaren Betätigungselemente 8 und 9 jeweils wenigstens annähernd ausgleichbar.

Der Aktor 10 ist vorliegend über eine Schaltstange 11 und über mehrere mit der Vorgelegewelle 2 verbundene und gegenüber der Vorgelegewelle 2 bewegbar ausgeführte Halteelemente 12, wovon in Fig. 1 nur eines dargestellt ist, mit den Betätigungselementen 8 und 9 in der nachbeschriebenen Art und Weise wirkverbunden, um das Betätigungselement 8 oder das Betätigungselement 9 mit dem Losrad 3 bzw. dem Losrad 7 in reibschlüssigen Kontakt zu bringen.

Das Halteelement 12 ist vorliegend in einem Langloch 13 in axialer Richtung der Vorgelegewelle 2 aus einer mittleren Schaltstellung SM in Richtung des ersten Losrades 3 oder in Richtung des zweiten Losrades 7 axial verschiebbar ausgeführt und rotiert im Betrieb des Vorgelegegetriebes mit der Drehzahl der Vorgelegewelle. Die Schaltstange 11 ist vorliegend drehfest mit einem Gehäuse des Vorgelegegetriebes ausgeführt, so dass im Verbindungsbereich 14 zwischen der Schaltstange 11 und dem Halteelement 12 eine in Fig. 1 dargestellte Drehzahlauskopplung vorgesehen ist.

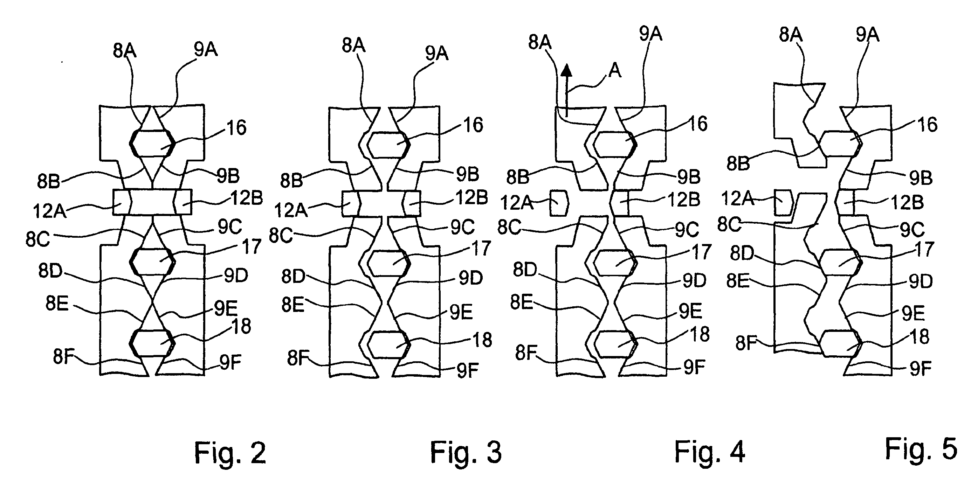

Fig. 2 bis Fig. 5 zeigen die Betätigungselemente 8 und 9 der Vorrichtung 1 gemäß Fig. 1 in Form einer Abwicklung während verschiedener Schaltphasen der Vorrichtung 1 ausgehend von einem in Fig. 2 dargestellten Zustand, zu dem weder das erste Losrad 3 noch das zweite Losrad 7 drehfest mit der Vorgelegewelle 2 verbunden sind, bis hin zu einem in Fig. 5 dargestellten Schaltzustand der Vorrichtung 1, zu dem das erste Losrad 3 drehfest mit der Vorgelegewelle 2 verbunden ist.

Die Betätigungselemente 8 und 9 sind mit mehreren mit einer senkrecht zu einer Symmetrielinie 15 der Vorgelegewelle 2 stehenden Querschnittsebene einen Winkel einschließenden Flanken 8A bis 8F bzw. 9A bis 9F ausgeführt und wirken im Bereich der einander zugewandten Flanken 8A und 8B, 8C und 8D sowie 8E und 8F bzw. 9A und 9B, 9C und 9D sowie 9E und 9F jeweils mit einem Stützkörper 16 bis 18 zusammen, die fest mit der Vorgelegewelle 2 verbunden sind.

Dabei stehen die Betätigungselemente 8 und 9 mit den wellenfest ausgebildeten Stützkörpern 16 bis 18 derart in Wirkverbindung, dass das Losrad 3 oder das Losrad 7 in gegenüber der Welle drehbarem Zustand des Betätigungselementes 8 oder des Betätigungselementes 9 von diesen mit einer in Abhängigkeit eines von der Vorgelegewelle 2 auf das Losrad 3 oder das Losrad 7 zu übertragenden Drehmomentes stehenden und von der aktorseitigen Betätigung unabhängigen Betätigungskraft beaufschlagt sind.

In dem in Fig. 1 und Fig. 2 dargestellten neutralen Schaltzustand SM der Vorrichtung 1 ist das Halteelement 12 über einen Bereich 12A formschlüssig mit dem Betätigungselement 8 und mit einem Bereich 12B formschlüssig mit dem Betätigungselement 9 verbunden, so dass beide Betätigungselemente 8 und 9 drehfest mit der Vorgelegewelle 2 verbunden sind. Zusätzlich ist das Halteelement 12 im Bereich seiner der Symmetrielinie 15 abgewandten Umfangsfläche über einen Sperrkörper 19 mit einem hülsenartigen Ringelement 20 verbunden. Das hülsenartige Ringelement 20 ist in der in Fig. 1 dargestellten neutralen Schaltstellung SM der Vorrichtung 1 zwischen den Betätigungselementen 8 und 9 angeordnet und mit seinen den Betätigungselementen 8 und 9 zugewandten Planflächen mit den dem Ringelement 20 zugewandten Planflächen der Betätigungselemente 8 und 9 in Eingriff bringbar.

Ausgehend von der in Fig. 2 dargestellten neutralen Schaltstellung SM der Vorrichtung 1 wird das Halteelement 12 bei einer entsprechenden aktuatorseitigen Betätigung in Richtung des Losrades 3 in axialer Richtung der Vorgelegewelle 2 verschoben. Dabei wird das über den Sperrkörper 19 mit dem Halteelement 12 verbundene Ringelement 20 ebenfalls in Richtung des Losrades 3 bewegt und kommt nach Überwindung eines eventuell vorgesehenen Spieles am Betätigungselement 8 zur Anlage, wodurch das in axialer Richtung der Vorgelegewelle 2 auf dieser verschiebbar angeordnete Betätigungselement 8 ebenfalls in Richtung des Losrades 3 verschoben wird.

Mit zunehmendem Schaltweg des Halteelementes 12 wird das Betätigungselement 8 mit einer kegelig ausgeführten Umfangsfläche 8A gegen eine ebenfalls kegelförmig ausgebildeten Reibfläche 3A des Losrades 3 geschoben. Gleichzeitig wird das Losrad 3 in axialer Richtung der Vorgelegewelle 2 in Richtung eines drehfest mit der Vorgelegewelle 2 ausgeführten Wellenbundes 21 verschoben und mit einer weiteren kegelig ausgeführten Reibfläche 3B in Eingriff mit einer kegelig ausgeführten Reibfläche 21 A des Wellenbundes 21 gebracht.

Das hülsenartige Ringelement 20 ist vorliegend mit einer vordefinierten Elastizität ausgeführt, womit das Sperrelement 19 mittels einer vordefinierten Federkraft in der in Fig. 1 dargestellten Position zwischen dem Ringelement 20 und dem Halteelement 12 angeordnet ist. Dabei entspricht die vordefinierte Elastizität des Ringelementes 20 und die daraus resultierende und auf das Sperrelement 19 wirkende Federkraft einer auf das Betätigungselement 8 einwirkenden und in axialer Richtung gerichteten Betätigungskraft, mit der eine Differenzdrehzahl zwischen der Vorgelegewelle 2 und dem Losrad 3 bzw. der Vorgelegewelle 2 und dem Losrad 7 wenigstens annähernd reibschlüssig ausgleichbar ist.

Übersteigt eine von dem Aktor 10 ausgehende aktuatorseitige Betätigungskraft die das Sperrelement 19 in der in Fig. 1 dargestellten Position zwischen dem Ringelement 20 und dem Halteelement 12 haltende Federkraft, wird das Ringelement 20 in radialer Richtung der Vorgelegewelle 2 reversibel verformt und der Sperrkörper rollt aus der nutenförmigen Vertiefung 20A des Ringelementes 20, wobei dann eine Relativbewegung zwischen dem Betätigungselement 8 und dem Halteelement 12 bzw. dem Bereich 12A des Halteelementes 12 möglich ist.

Das bedeutet, dass während einer ersten Schaltphase der Vorrichtung 1 das Betätigungselement 8 gemeinsam mit dem Halteelement 12 ausgehend von der in Fig. 2 dargestellten Position in Richtung der in Fig. 3 dargestellten Position aufgrund der aktuatorseitigen Betätigung geführt wird, wobei das Halteelement 12 das Betätigungselement 8 über den Bereich 12A drehfest mit der Vorgelegewelle 2 verbindet.

Erst mit Überschreiten der Federkraft des Ringelementes 20 ist eine Relativbewegung zwischen dem Betätigungselement 8 und dem Halteelement 12 bzw. dem Bereich 12A des Halteelementes 12 möglich und der Bereich 12A ist in der in Fig. 4 dargestellten Art und Weise aus dem Eingriff mit dem Betätigungselement 8 führbar, während der Bereich 12B nach wie vor formschlüssig mit dem Betätigungselement 9 verbunden ist.

Das bedeutet, dass das Betätigungselement 8 in dem in Fig. 4 dargestellten Schaltzustand der Vorrichtung 1 drehbar und in axialer Richtung verschiebbar auf der Vorgelegewelle angeordnet ist, während das Betätigungselement 9 über den Bereich 12B drehfest mit der Vorgelegewelle 2 verbunden ist und über eine zwischen dem Losrad 7 und dem Betätigungselement 9 angeordnete erste Federeinrichtung 22 gegen das Ringelement 20 gedrückt ist. Zusätzlich ist zwischen dem Losrad 7 und einem weiteren Wellenbund 23 eine zweite Federeinrichtung 24 vorgesehen, welche das Losrad 7 in nicht betätigtem Zustand aus dem Eingriff mit dem weiteren Wellenbund 23 führt.

Darüber hinaus ist sowohl zwischen dem Wellenbund 21 und dem Losrad 3 als auch zwischen dem Losrad 3 und dem Betätigungselement 8 jeweils eine dritte Federeinrichtung 25 und eine vierte Federeinrichtung 26 vorgesehen, um das Losrad 3 bei entsprechender Schaltstellung der Vorrichtung 1 aus dem Eingriff mit dem Wellenbund 21 und dem Betätigungselement 8 führen zu können.

Bei Vorliegen eines in Fig. 4 dargestellten Schaltzustandes der Vorrichtung 1, zu dem das Betätigungselement 8 mit seiner Reibfläche 8A reibschlüssig mit der Reibfläche 3A des Losrades 3 in Eingriff steht, wird das Betätigungselement 8 in Abhängigkeit eines von der Vorgelegewelle 2 auf das Losrad 3 zu übertragenden Drehmomentes in Richtung des in Fig. 4 dargestellten Pfeiles A verdreht. Dabei kommt das Betätigungselement 8 im Bereich seiner Flanken 8B, 8D und 8F mit den Stützkörpern 16 bis 18 in Anlage und erfährt in Abhängigkeit seiner Verdrehung eine weitere axiale Verschiebung in Richtung des Losrades 3 bzw. des Wellenbundes 21, wodurch eine auf das Losrad 3 einwirkende Betätigungskraft ohne weitere aktuatorseitige Betätigung des Betätigungselementes 8 ansteigt und das Losrad 3 in Abhängigkeit des zu übertragenden Drehmomentes drehfest mit der Vorgelegewelle 2 verbunden ist. Dieser Schaltzustand der Vorrichtung 1 ist in Fig. 5 gezeigt.

Das Losrad 7 ist über die Vorrichtung 1 analog zu der vorbeschriebenen Art und Weise durch aktuatorseitiges Betätigen des Halteelementes 12 ausgehend von der neutralen Schaltposition SM in Richtung des Losrades 7 bei Vorliegen einer Anforderung zum Zuschalten der der Zahnradpaarung zwischen dem Losrad 7 und dem Zahnrad 6 entsprechenden Übersetzungsstufe drehfest mit der Vorgelegewelle 2 verbindbar.

Bei dem in der Zeichnung dargestellten Ausführungsbeispiel der Vorrichtung nach der Erfindung wird die zum Synchronisieren der Losräder 3, 7 und der Vorgelegewelle 2 erforderliche Betätigungskraft und die Freigabe der Selbstverstärkung der Vorrichtung 1 mittels des Aktors 10, der die Betätigungskraft hydraulisch, elektromechanisch, pneumatisch oder magnetisch zur Verfügung stellt, realisiert.

Um einen Synchronzustand zwischen dem Losrad 3 bzw. dem Losrad 7 und der Vorgelegewelle 2 zu ermitteln, ist die Vorrichtung 1 mit einem nicht näher dargestellten Steuergerät ausgeführt. Dabei ist mittels der aktuellen Überwachung der Betriebszustände der Losräder 3 und 7 sowie der Vorgelegewelle auch ein Zeitpunkt, zu welchem der Synchronzustand erreicht wird, vorher bestimmbar.

Alternativ zu der in Fig. 2 bis Fig. 5 dargestellten Ausführungsbeispiel der Vorrichtung 1, bei dem die Betätigungskraft im Bereich zwischen den Stützkörpern 16 bis 18 und den Betätigungselementen 8 und 9 in Form eines Gleitlagers übertragen wird, ist es bei einer nicht näher dargestellten Ausführungsform der Vorrichtung nach der Erfindung vorgesehen, dass die Betätigungskraft in diesem Bereich über Wälzlagerungen übertragen wird.

Alternativ zu der axialen Verschiebung des Halteelementes 12 der Vorrichtung 1 ist es bei weiteren in der Zeichnung nicht näher dargestellten Ausführungsformen vorgesehen, die drehfeste Verbindung der Betätigungselemente 8 und 9 mit der Vorgelegewelle 2 durch radiales Bewegen oder Verdrehen der Bereiche 12A und 12B des Halteelementes 12 zu lösen und die Selbstverstärkung der Vorrichtung 1 in gewünschtem Umfang freigeben zu können.

Zudem ist es bei weiteren ebenfalls in der Zeichnung nicht näher dargestellten Ausführungsbeispielen der erfindungsgemäßen Vorrichtung vorgesehen, die Reibflächen zwischen den Losrädern und den Betätigungselementen sowie zwischen den Losrädern und den Wellenbunden alternativ zu der kegeligen Ausführung zylindrisch oder als Planflächen auszuführen, wobei letztgenannte Ausgestaltung mit Planflächen im Vergleich zu der kegeligen Ausführung der Reibflächen durch kürzere Stellwege gekennzeichnet ist.

Abweichend von der Betätigung der Betätigungselemente der Vorrichtung nach der Erfindung aus dem Inneren der Welle bzw. der Vorgelegewelle heraus sind die Betätigungselemente bei weiteren vorteilhaften Ausführungen der erfindungsgemäßen Vorrichtung auch in Bezug auf die Oberfläche der Welle von außen, beispielsweise über Schaltgabeln oder dergleichen, in vorbeschriebener Art und Weise betätigbar, um eine Drehzahl eines mit einer Welle drehfest zu verbindenden Bauteiles an die Drehzahl der Welle anpassen zu können und anschließend die beiden Elemente drehfest miteinander verbinden zu können.

Grundsätzlich ist die erfindungsgemäße Vorrichtung durch eine kompakte Bauweise gekennzeichnet und ein Fahrkomfort ist aufgrund der rein reibschlüssigen Ausführung im Vergleich zu Synchronisierungen, die mit Klauen ausgeführt sind, auf einfache und kostengünstige Art und Weise verbessert.

Zusätzlich ist ein Losrad, an welchem im Wesentlichen nur im zugeschalteten Zustand, d. h. in einem Drehmoment übertragenden Zustand, nennenswerte Kippmomente angreifen, durch ein Betätigungselement sowie einen Wellenbund in zugeschaltetem Zustand abgestützt und mit einer steiferen Lagerbasis ausgeführt als im abgeschalteten Zustand. Damit wird eine im Betrieb auftretende Geräuschentwicklung im Vergleich zu herkömmlich ausgeführten Losrädern bei geringerem axialen Bauraumbedarf verbessert und eine Lebensdauer eines Zahnrades wird aufgrund der geringeren Verkippung erhöht.

### Bezugszeichen

- 1: Vorrichtung
- 2: Welle, Vorgelegewelle
- 3: Bauteil, Losrad
- 3A, B: Reibfläche
- 4: Getriebehauptwelle
- 5, 6: Zahnrad
- 7: Losrad
- 8: Betätigungselement
- 8A: Reibfläche
- 8A bis 8F: Flanke
- 9: Betätigungselement
- 9A bis 9F: Flanke
- 10: Aktor
- 11: Schaltstange
- 12: Halteelement
- 12A, B: Bereich
- 13: Langloch
- 14: Verbindungsbereich
- 15: Symmetrielinie
- 16, 17, 18: Stützkörper
- 19: Sperrkörper
- 20: Ringelement
- 20A: nutenförmige Vertiefung
- 21: Wellenbund
- 21 A: Reibfläche
- 22: Federeinrichtung
- 23: Wellenbund
- 24, 25, 26: Federeinrichtung

## Patentansprüche

1. Vorrichtung (1) zum drehfesten Verbinden einer Welle (2) mit einem drehbar auf der Welle (2) gelagerten Bauteil (3, 7), vorzugsweise zum Verbinden eines als Losrad ausgeführten Zahnrades einer Gangstufe einer Getriebeeinrichtung mit einer Getriebewelle, mit einem in axialer Richtung verschieblich und drehbar auf der Welle (2) gelagerten Betätigungselement (8, 9), das über einen Aktor mit der Welle (2) drehfest verbindbar ist, wobei eine Differenzdrehzahl zwischen dem Bauteil (3, 7) und der Welle (2) über das aktorseitig betätigbare Betätigungselement (8, 9) wenigstens annähernd ausgleichbar ist, **dadurch gekennzeichnet, dass** das Betätigungselement (8, 9) zum Ausgleichen einer Differenzdrehzahl zwischen der Welle (2) und dem Bauteil (3, 7) in gegenüber der Welle (2) drehfestem Zustand mit dem Bauteil (3, 7) bei entsprechender aktorseitiger Betätigung bereichsweise reibschlüssig in Wirkverbindung bringbar ist und zum drehfesten Verbinden des Bauteils (3, 7) mit der Welle (2) mittels des Aktors (10) von einem drehfesten in einen gegenüber der Welle (2) drehbaren Zustand überführbar ist und mit wenigstens einem wellenfest ausgebildeten Stützkörper (16, 17, 18) derart in Wirkverbindung steht, dass das Bauteil (3, 7) in gegenüber der Welle (2) drehbarem Zustand des Betätigungselementes (8, 9) von diesem mit einer in Abhängigkeit eines von der Welle (2) auf das Bauteil (3, 7) zu übertragenden Drehmomentes stehenden und von der aktorseitigen Betätigung im Wesentlichen unabhängigen Betätigungskraft beaufschlagt ist.

2. Vorrichtung nach Anspruch 1, **dadurch gekennzeichnet, dass** das Betätigungselement (8, 9) mit wenigstens zwei mit einer senkrecht zu einer Symmetrielinie (15) der Welle (2) stehenden Querschnittsebene einen Winkel einschließenden Flanken (8A bis 8F, 9A bis 9F) ausgeführt ist und im Bereich der einander zugewandten Flanken (8A und 8B, 8C und 8D, 8E und 8F, 9A und 9B, 9C und 9D, 9E und 9F) mit dem Stützkörper (16 bis 18) zusammenwirkt.

3. Vorrichtung nach Anspruch 1 oder 2, **dadurch gekennzeichnet , dass** das Betätigungselement (8, 9) in drehfest mit der Welle (2) verbundenem Zustand über wenigstens ein mit der Welle (2) verbundenes und gegenüber der Welle (2) bewegbar ausgeführtes Halteelement (12) mit dem Aktor (10) wirkverbunden ist, so dass das Betätigungselement (8, 9) bei entsprechender aktorseitiger Betätigung mit dem Bauteil (3, 7) in reibschlüssigem Kontakt steht.

4. Vorrichtung nach einem der Ansprüche 1 bis 3, **dadurch gekennzeichnet, dass** die Wirkverbindung zwischen dem Betätigungselement (8, 9) und dem Stützkörper (16 bis 18) ein Gleit- oder Wälzlager aufweist.

5. Vorrichtung nach Anspruch 3 oder 4, **dadurch gekennzeichnet , dass** das Halteelement (12) zum Überführen des Betätigungselementes (8, 9) von einem drehfesten in einen gegenüber der Welle (2) drehbaren Zustand von dem Aktor (10) axial und/oder radial verschoben wird und/oder verdreht wird, so dass eine formschlüssige Verbindung zwischen dem Halteelement (12) und dem Betätigungselement (8, 9) aufgehoben ist.

6. Vorrichtung nach einem der Ansprüche 3 bis 5, **dadurch gekennzeichnet, dass** eine Relativbewegung zwischen dem Betätigungselement (8, 9) und dem Haltelement (12) mittels eines angefederten Sperrkörpers (19) gesperrt ist und erst ab Übersteigen einer definierten und zu der an dem Sperrkörper (19) angreifenden Federkraft äquivalenten Betätigungskraft des Aktors (10) das Halteelement (12) aus dem Eingriff mit dem Betätigungselement (8, 9) führbar und das Betätigungselement (8, 9) drehbar auf der Welle (2) angeordnet ist.

7. Vorrichtung nach einem der Ansprüche 1 bis 6, **dadurch gekennzeichnet, dass** ein elektronisches Steuergerät vorgesehen ist, mittels welchem eine Differenzdrehzahl zwischen dem Bauteil (3, 7) und der Welle (2) ermittelbar ist.

8. Vorrichtung nach einem der Ansprüche 1 bis 7, **dadurch gekennzeichnet, dass** das Betätigungselement (8, 9) mit einer Kegelfläche (8A) oder einer Planfläche ausgeführt ist, die zum drehfesten Verbinden des Bauteiles (3, 7) mit einer Kegelfläche (3A) oder einer Planfläche des Bauteiles (3, 7) in Eingriff bringbar ist.

## Claims

1. Apparatus (1) for connecting a shaft (2) fixedly to a component (3, 7) so as to rotate with it, which component (3, 7) is mounted rotatably on the shaft (2), preferably for connecting a gearwheel, configured as an idler gear, of a gear stage of a transmission device to a transmission shaft, having an actuating element (8, 9) which is mounted on the shaft (2) such that it can be displaced in the axial direction and can be rotated, which actuating element (8, 9) can be connected fixedly via an actuator to the shaft (2) so as to rotate with it, it being possible for a differential rotational speed between the component (3, 7) and the shaft (2) to be equalized at least approximately via the actuating element (8, 9) which can be actuated on the actuator side, **characterized in that**, in the rotationally fixed state with respect to the shaft (2), the actuating element (8, 9) can be brought into operative connection frictionally in regions with the component (3, 7) in the case of corresponding actuator-side actuation, in order to equalize a differential rotational speed between the shaft (2) and the component (3, 7), and can be transferred from a rotationally fixed state into a rotational state with respect to the shaft (2) by means of the actuator (10) for connecting the component (3, 7) to the shaft (2) in a rotationally fixed manner, and is operatively connected to at least one supporting body (16, 17, 18) which is configured fixedly with respect to the shaft, in such a way that, in a rotatable state of the actuating element (8, 9) with respect to the shaft (2), the component (3, 7) is loaded by the said actuating element (8, 9) with an actuating force which is a function of a torque to be transmitted by the shaft (2) to the component (3, 7) and is substantially independent of the actuator-side actuation.

2. Apparatus according to Claim 1, **characterized in that** the actuating element (8, 9) is configured with at least two flanks (8A to 8F, 9A to 9F) which enclose an angle with a cross-sectional plane which lies perpendicularly with respect to an axis of symmetry (15) of the shaft (2), and interacts with the supporting body (16 to 18) in the region of the flanks (8A and 8B, 8C and 8D, 8E and 8F, 9A and 9B, 9C and 9D, 9E and 9F) which face one another.

3. Apparatus according to Claim 1 or 2, **characterized in that**, in the rotationally fixed state with the shaft (2), the actuating element (8, 9) is operatively connected to the actuator (10) via at least one holding element (12) which is connected to the shaft (2) and is configured so as to be movable with respect to the shaft (2), with the result that the actuating element (8, 9) is in frictional contact with the component (3, 7) in the case of corresponding actuator-side actuation.

4. Apparatus according to one of Claims 1 to 3, **characterized in that** the operative connection between the actuating element (8, 9) and the supporting body (16 to 18) has a sliding or anti-friction bearing.

5. Apparatus according to Claim 3 or 4, **characterized in that** the holding element (12) is rotated and/or displaced axially and/or radially by the actuator (10) in order to transfer the actuating element (8, 9) from a rotationally fixed state into a rotatable state with respect to the shaft (2), with the result that a positively locking connection between the holding element (12) and the actuating element (8, 9) is cancelled.

6. Apparatus according to one of Claims 3 to 5, **characterized in that** a relative movement between the actuating element (8, 9) and the holding element (12) is blocked by means of a sprung locking body (19), and the holding element (12) can be brought out of the engagement with the actuating element (8, 9) only after a defined actuating force of the actuator (10) which is equivalent to the spring force which acts on the locking body (19) is exceeded, and the actuating element (8, 9) is arranged rotatably on the shaft (2).

7. Apparatus according to one of Claims 1 to 6, **characterized in that** an electronic control unit is provided, by means of which a differential rotational speed between the component (3, 7) and the shaft (2) can be determined.

8. Apparatus according to one of Claims 1 to 7, **characterized in that** the actuating element (8, 9) is configured with a conical face (8A) or a planar face which can be brought into engagement with a conical face (3A) or a planar face of the component (3, 7) in order to connect the component (3, 7) in a rotationally fixed manner.

## Revendications

1. Dispositif (1) pour la liaison solidaire en rotation d'un arbre (2) à un composant (3, 7) monté à rotation sur l'arbre (2), de préférence pour la liaison d'une roue dentée réalisée sous forme de pignon fou d'un rapport de vitesse d'un dispositif de transmission à un arbre de transmission, comprenant un élément d'actionnement (8, 9) déplaçable dans la direction axiale et supporté à rotation sur l'arbre (2), qui peut être relié de manière solidaire en rotation à l'arbre (2) par le biais d'un actionneur, une différence de vitesse de rotation entre le composant (3, 7) et l'arbre (2) pouvant être au moins approximativement compensée par le biais de l'élément d'actionnement (8, 9) pouvant être commandé par l'actionneur, **caractérisé en ce que** l'élément d'actionnement (8, 9) pour la compensation d'une différence de vitesse de rotation entre l'arbre (2) et le composant (3, 7) peut être amené en liaison fonctionnelle par section par engagement par friction avec le composant (3, 7) lors d'un actionnement correspondant par l'actionneur dans l'état fixé en rotation par rapport à l'arbre (2), et pouvant être transféré pour la liaison solidaire en rotation du composant (3, 7) à l'arbre (2) au moyen de l'actionneur (10) d'un état solidaire en rotation dans un état pouvant tourner par rapport à l'arbre (2), et étant en liaison fonctionnelle avec au moins un corps de support (16, 17, 18) réalisé de manière solidaire à l'arbre de telle sorte que le composant (3, 7) soit sollicité par l'élément d'actionnement (8, 9) avec une force d'actionnement dépendant d'un couple à transmettre de l'arbre (2) au composant (3, 7) et essentiellement indépendante de l'actionnement par l'actionneur, dans l'état dans lequel l'élément d'actionnement (8, 9) peut tourner par rapport à l'arbre (2).

2. Dispositif selon la revendication 1, **caractérisé en ce que** l'élément d'actionnement (8, 9) est réalisé avec au moins deux flancs (8A à 8F, 9A à 9F) formant un angle avec un plan de section transversale perpendiculaire à un axe de symétrie (15) de l'arbre (2), et coopère dans la région des flancs mutuellement associés (8A et 8B, 8C et 8D, 8E et 8F, 9A et 9B, 9C et 9D, 9E et 9F) avec le corps de support (16 à 18).

3. Dispositif selon la revendication 1 ou 2, **caractérisé en ce que** l'élément d'actionnement (8, 9) dans l'état connecté de manière solidaire en rotation à l'arbre (2) est en liaison fonctionnelle avec l'actionneur (10) par le biais d'au moins un élément de retenue (12) connecté à l'arbre (2) et réalisé de manière mobile par rapport à l'arbre (2), de telle sorte que l'élément d'actionnement (8, 9) soit en contact par engagement par friction avec le composant (3, 7) lors de l'actionnement correspondant par l'actionneur.

4. Dispositif selon l'une quelconque des revendications 1 à 3, **caractérisé en ce que** la liaison fonctionnelle entre l'élément d'actionnement (8, 9) et le corps de support (16 à 18) présente un palier lisse ou un palier à roulement.

5. Dispositif selon la revendication 3 ou 4, **caractérisé en ce que** l'élément de retenue (12) pour le transfert de l'élément d'actionnement (8, 9) est déplacé axialement et/ou radialement et/ou est tourné par l'actionneur (10) depuis un état solidaire en rotation dans un état pouvant tourner par rapport à l'arbre (2), de sorte qu'une liaison par engagement par coopération de forme entre l'élément de retenue (12) et l'élément d'actionnement (8, 9) soit supprimée.

6. Dispositif selon l'une quelconque des revendications 3 à 5, **caractérisé en ce qu'**un mouvement relatif entre l'élément d'actionnement (8, 9) et l'élément de retenue (12) est bloqué au moyen d'un corps de verrouillage (19) à suspension à ressort, et seulement à partir d'un dépassement d'une force d'actionnement de l'actionneur (10) définie et équivalente à la force de ressort s'appliquant au corps de verrouillage (19), l'élément de retenue (12) peut être guidé hors d'engagement avec l'élément d'actionnement (8, 9) et l'élément d'actionnement (8, 9) est disposé à rotation sur l'arbre (2).

7. Dispositif selon l'une quelconque des revendications 1 à 6, **caractérisé en ce qu'**il est prévu un appareil de commande électronique, au moyen duquel une différence de vitesse de rotation peut être déterminée entre le composant (3, 7) et l'arbre (2).

8. Dispositif selon l'une quelconque des revendications 1 à 7, **caractérisé en ce que** l'élément d'actionnement (8, 9) est réalisé avec une surface conique (8A) ou une surface plane, qui peut être amenée en prise en vue de la liaison solidaire en rotation avec une surface conique (3A) ou une surface plane du composant (3, 7).
